(19) **Europäisches Patentamt**
**European Patent Office**
**Office européen des brevets**

(11) **EP 4 027 027 B1**

(12) **EUROPEAN PATENT SPECIFICATION**

(45) Date of publication and mention
of the grant of the patent:
**16.04.2025 Bulletin 2025/16**

(21) Application number: **22150762.7**

(22) Date of filing: **10.01.2022**

(51) International Patent Classification (IPC):
**F16B 37/12** *(2006.01)* **F16B 4/00** *(2006.01)*
**F16B 25/00** *(2006.01)* **F16B 37/04** *(2006.01)*

(52) Cooperative Patent Classification (CPC):
**F16B 37/125; F16B 4/004;** F16B 25/0015;
F16B 37/041

(54) **FASTENING DEVICE FOR PLASTICS AND METHOD FOR ITS MANUFACTURE**

BEFESTIGUNGSVORRICHTUNG FÜR KUNSTSTOFFE UND VERFAHREN ZU IHRER
HERSTELLUNG

DISPOSITIF DE FIXATION POUR LES MATIÈRES PLASTIQUES ET SON PROCÉDÉ DE
FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2021 NO 20210020**

(43) Date of publication of application:
**13.07.2022 Bulletin 2022/28**

(73) Proprietor: **K. Thorbergsen Mekaniske AS
8294 Hamaröy (NO)**

(72) Inventor: **Thorbergsen, Knut-Arne
8294 Hamaröy (NO)**

(74) Representative: **Onsagers AS
P.O. Box 1813 Vika
0123 Oslo (NO)**

(56) References cited:
**US-A1- 2002 102 146    US-A1- 2010 303 581
US-A1- 2015 117 976**

## Description

The present invention belongs to the technical field of fastening devices, and more particularly to mechanical fastening devices. The present invention relates to a fastening device for plastic materials.

## Background

Mechanical fastening devices are well known in building, construction and other industries. Some of them are limited to special types of material in which they are applied. Others request quite demanding operations in order to install the fastening device. Yet others offer only very limited bearing capability.

GB 2241549 discloses a plug with a tapered core and a central bore for receiving a fastener. A tapered trapezoidal thread and a tip give the plug a self-tapping effect. The plug has a head that is larger than the largest thread to stop the penetration into the underlying material. The plug is made of plastic by injection molding and has a recess which is arranged to receive a head for the fastening means.

DE 2057970 discloses an expansion plug made of plastic with a central hole. Such expansion plugs are known in many different shapes and embodiments. The expansion plug can have external trapezoidal threads and be used in pre-drilled holes to fasten a screw in the central hole. The central hole is arranged with threads that taper towards the tip of the expansion plug.

EP 1055074 relates to a plate anchor used to mount and attach various materials to a wall consisting of a fragile material. The plate anchor is self-tapping and is screwed directly into the wall without the need for a borehole. The plate anchor is designed as a screw with external threads and has a drilling part at one end and a flange part at the other end. The plate anchor is arranged with a central hole with internal threads and with a slot. A fastener can be bolted into the plate anchor.

JP 55166519 discloses a hole screw which is tapered from the head to the tip and which has external threads. The hole screw has a slot in the middle that allows the fastening of a bolt or the like.

KR 200358130 discloses a hollow screw with tapered threads which are arranged at an acute angle around the main shaft. The screw is not tapered from the flange part towards the end which first meets the underlying material and into which the screw is to be inserted. The hole is arranged centrally in the screw and allows the fastening of a bolt or the like.

US 5308205 relates to a holding pin of plastic material which resembles a dowel and which is particularly suitable for attaching furniture fittings to furniture articles. The holding pin can be mounted by pressing or driving it into a bore. The holding pin has an elongate design and from its outer surface extends radially a number of projecting ribs which are arranged in the longitudinal direction of the holding pin. The diameter of the ribs increases from the head of the holding pin to the tip. A hole is arranged centrally in the holding pin and allows the fastening of a screw or the like. The hole is tapered from the head towards the tip of the retaining pin.

US 7152837 relates to a hanger made of a strand of material formed into a plurality of coils of stepwise decreasing diameter to make a conical hollow spiral. The hanger is designed with a hook or other engagement at one end of the spiral. The coil is connected by shape or frictional connection to an opening in a selected substrate to provide a receptacle for securing a selected object.

WO 2020/193272 A1 discloses a fastener comprising an anchor bolt and a nut. The nut comprises a rearward nut section, a forward nut section located closer to an anchor portion of the anchor bolt than the rearward nut section, and an outside shoulder for load transfer into the nut, which is located between the forward nut section and the rearward nut section and which faces the anchor portion of the anchor bolt, wherein an internal thread of the nut extends at least in the forward nut section and the internal thread of the nut threadedly engages an external thread of a threaded rod of the anchor bolt at least in the forward nut section.

US 20020102146A1 discloses a self-tapping threaded insert for threadedly mounting another component by a threaded central connector. An assembly of the insert and a mounting member for threadedly mounting the insert are assembled by a method for mounting the self-tapping threaded insert. The insert has a threaded shank that is threaded into a partially tapped hole and has a shank end with flutes of a construction that provides self-tapping. Upon final torqueing, a locking flange of the insert locks against a surface of the member as threads of the insert shank are completely engaged with the hole.

US 2015/0117976 A1 discloses a threaded bushing for fiber-reinforced plastic.

There is a need for fastening devices which can be easily installed and which offer high bearing capability. There is particularly a need for fastening devices which can be installed from one side of an arrangement without the requirement of action such as fastening nut locks on the opposite side of the arrangement.

## Objectives

It is therefore an objective of the present invention to provide an improved mechanical fastening device for plastic materials.

It is a further objective to provide a method for applying an improved mechanical fastening device in plastic materials

It is still a further objective to provide articles comprising plastic material with improved fastening device.

## The present invention

The above mentioned objectives are achieved by a fastening device as defined by claim 1.

According to another aspect, the present invention concerns a method as defined by claim 9.

Yet another aspect the present invention concerns articles as defined by claim 11.

Preferred embodiments of the different aspects of the invention are disclosed by the dependent claims.

The present invention relates to an assembly of a fastening device and a plastic material, wherein the fastening device is intended to be introduced into the plastic material, where it as an anchor provides excellent fastening for a utility. The fastening device comprises a threaded bush, typically metallic, which is provided with a coarse thread on the outside of the bush. The bush will have a flexibility less than the flexibility of the plastic material. On the hollow inside of the bush a fine thread in the shape of a standard metric thread is arranged. Any kind of utility may be screwed into the standard metric thread. In order to introduce the fastening device into the plastic material threads are cut into the plastic material with a tapered tool which preferably comprises tapered threads. A cavity in the plastic material comprising internal threads is created. During introduction of the fastening device into the plastic material, the elasticity of the plastic material is of the essence. The coarse thread on the outside of the bush, which is introduced into the cavity in the plastic material, is complementary to the thread in the cavity of the plastic material. The distance within the groove of the thread on the outside of the bush is comparable to the distance within the groove of the thread on the inside of the cavity, which has about the same size and preferably a slightly smaller size than the distance within the groove of the thread on the outside of the bush. When the fastening device, the bush is introduced into the cavity the distance within the groove of the complementary thread is increased. Once the bush is located screwed into the cavity of the plastic material the coarse thread on the outside of the bush and the complementary thread of the cavity of the plastic material are engaged by compression and/or friction. The distance within the thread groove in the cavity is increased by the thread grooves on the outside of the bush engaging the thread grooves in the cavity. The increase in the distance then screwing the bush must take place within the elasticity of the plastic material in order to avoid the plastic material being exposed to crack formation. Elasticity of different plastic materials according to the invention can be compared, among other things, by measuring the elongation at break of the plastic materials with standardized test methods.

From the following discussion, it may seem that the fastening device and the bush is one and the same thing. This is more or less correct, the bush may be considered to be the physical form of the present invention, but its interaction with the plastic material is also significant.

The desired immobility of the fastening device, when attached, is provided by friction forces, which apply when the bush is introduced into the cavity and when it is tried to be loosen or removed. It is an advantage of the present invention that the introduction of the bush is facilitated by the elasticity of the plastic material, whereas loosening is hindered by forces which originate from said elasticity, too.

In a first embodiment, a trapezoidal thread is chosen as the coarse thread. Tools for creating trapezoidal threads are readily available. Trapezoidal threads may with their flat top provide more uniform compression and/or friction forces between the thread on the outside of the bush and the complementary thread of the cavity of the plastic material than threads with different shapes.

In another embodiment, the distance within the groove of the complementary thread is increased by introduction of the bush into the cavity of the plastic material preferably by 0.1% to 10%, more preferred 0.3% to 6% and most preferred 0.5% to 3%. It is important that the increase of the distance within the groove of the thread on the inside of the cavity, caused by the bush, does not exceed the limit of elasticity of the plastic material.

In another embodiment, high density polyethylene (HDPE) is chosen as the plastic material. HDPE is known for its high strength-to-density ratio. The density of HDPE can typically range from 930 to 970 kg/m$^3$. Friction depends on the shape of the coarse thread and the physical properties such as elasticity and surface tension of the plastic material. It is an advantage to combine trapezoidal thread and high density polyethylene in the present innovation.

In yet another embodiment, the friction engaging the coarse thread on the outside of the bush and the complementary thread of the cavity of the plastic material is increased by structural modification of the coarse thread on the outside of the bush. The structure of the coarse thread on the outside of the bush is instrumental for providing friction between bush and plastic material. A modification of this structure, which may increase the friction to be provided in order to loosen or remove the bush is particularly relevant, if the friction to be provided in order to introduce the bush into the cavity, is not increased at the same level. In order to provide an efficient increase of friction the coarse thread on the outside of the bush has after the structural modification to comprise at least one modified contact area which is engaged with the complementary thread.

In another embodiment, the modified contact area comprises a structure selected from the group consisting of random unevenness, random roughness, regular unevenness and regular roughness which represent physical structural modifications.

In another embodiment, the modified contact area comprises a structure selected from the group consisting a changed chemical structure obtained by means selected from the group consisting of oxidation and etching or selected from the group consisting of coating, gluing and impregnation.

Yet another embodiment refers to a method for bolting a fastening device for plastics into a plastic material of known elasticity. The fastening device comprises a threaded bush, typically metallic, which is arranged with a coarse thread on the outside of the bush. On the hollow inside of the bush, a standard metric thread is arranged. A cavity with coarse threads is formed in the plastic material, said threads being complementary to the threads on the outside of the bush. The bush is screwed into the threaded cavity of a plastic material and, as a consequence, the distance within the groove of the complementary thread is increased. The coarse thread on the outside of the bush and the complementary thread of the cavity of the plastic material are engaged by compression and/or friction, which keep the fastening device in place.

Yet another embodiment refers to an article comprising an assembly of a fastening device and a plastic material of known elasticity according to the present invention. The fastening device is to the limit screwed into the plastic material and a utility is screwed into the standard metric thread on the hollow inside of the fastening device and full momentum can be applied on the utility without moving the fastening device. By full momentum is meant that the fastening device does not come loose when the standardized metric screw inserted inside the fastening device is loaded with maximum momentum. If the load exceeds the maximum momentum for the internal screw, it must be assumed that the internal screw would be damaged and that the fastening device would come loose for that reason.

Below a more detailed explanation of the present invention is provided in the form of exemplary embodiments with reference to enclosed drawings.

Figure 1 is a side sectional view of a piece of plastic material (10).
Figure 2 is a side sectional view of a tool (20).
Figure 3 is a side sectional view of the tool (20) from figure 2 in operation.
Figure 4 is a side sectional view of a bush (30) according to the present invention.
Figure 5 is a visualisation of forces applied during insertion of the bush into the plastic material.
Figure 6 is a side sectional view of the bush (30) inserted into the plastic material.

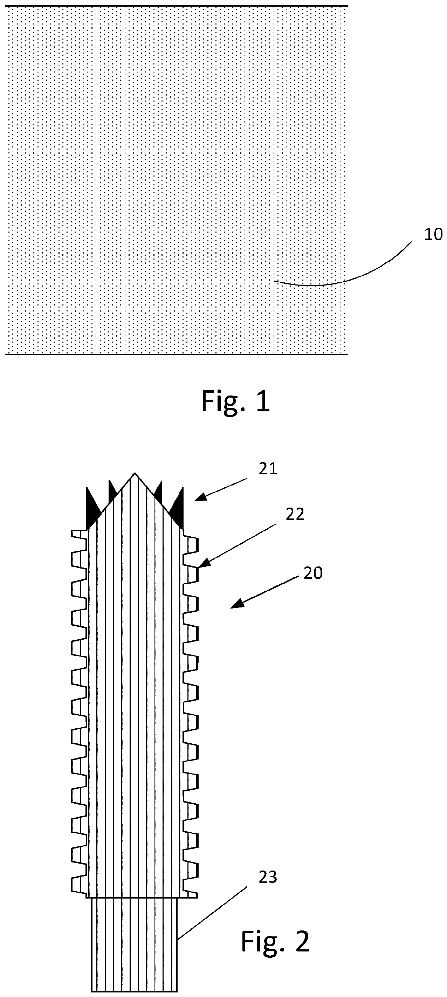

Figure 1 shows a side sectional view of a piece of plastic material 10 into which the fastening device has to be introduced. The plastic material does not show significant inhomogeneity within the range of the typical size of the fastening.

Figure 2 shows a side sectional view of a tool 20 which is used in order to provide a cavity in the plastic material. The tool is equipped with cutting edges 21 and means for creating coarse threads 22), in this case trapezoidal threads. A connecting area 23 for a drilling machine or the like, by which a momentum may be applied to the tool, is provided at its rear end.

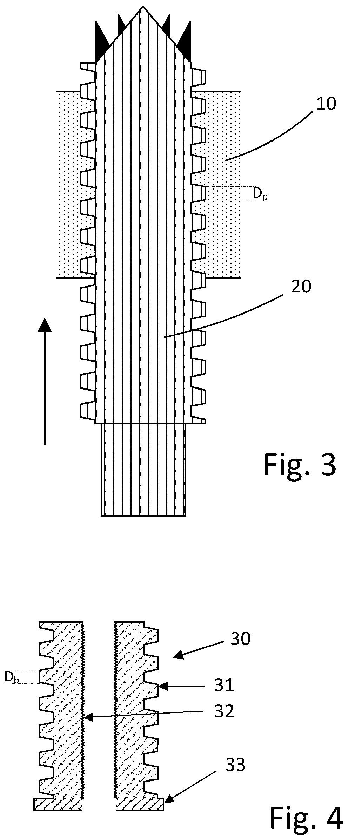

Figure 3 shows a side sectional view of the tool 20 from figure 2 in operation. The cavity is created in the plastic material 10 and arranged with coarse threads, in this case trapezoidal threads. The distance $D_p$ between the grooves created in the plastic material is also indicated.

Figure 4 shows a side sectional view of a bush 30 according to the present invention. The bush is arranged with coarse trapezoidal threads 31 which are complementary to the cavity created by the coarse threads 22 shown in figure 2. The groove width or distance $D_b$ of the coarse threads is indicated. On the hollow inside of the bush 30, a fine thread 32 in the shape of a standard metric thread is arranged. Any kind of utility may be screwed into the standard metric thread (not shown in figure 4). At one end of the bush 30, a hexagonal nut shaped extension 33 or the like may optionally be provided for the bush to be screwed into the plastic material. When the top of the nut shaped extension 33 reaches the plastic material, the introduction of the bush 30 comes to completion. Alternatively, the bush 30 may be completely introduced into the plastic material.

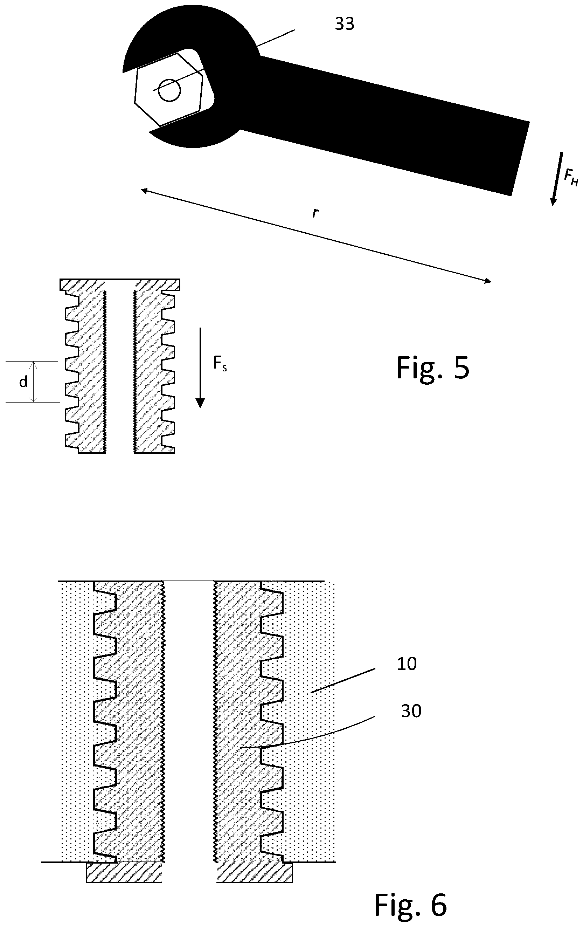

Figure 5 shows the correlation between the force $F_S$ which is applied on the bush 30 during introduction into the cavity and the force $F_H$ which acts on a tool with which the momentum is applied onto the top 33 of the bush 30. The distance r is the radius of the circular movement, d is the moved distance of the bush. Without taking into account any friction, the correlation can be expressed as shown in equation 1.

$$F_s = \frac{F_H \cdot 2 \cdot r \cdot \pi}{d} \qquad\qquad (\text{eq. 1})$$

By considering a contribution from friction, the correlation can be expressed as shown in equation 2.

$$F_s = \frac{F_H \cdot 2 \cdot r \cdot \pi}{d} \cdot \mu \qquad\qquad \text{(eq. 2)}$$

where $\mu$ is a real number larger than 1 representing contributions to friction from the structure of the involved threads on the outside of the bush and on the inside of the cavity. The contribution of friction is directly proportional to the force, which is needed to move the bush.

Figure 6 shows a bush 30, which is arranged with a trapezoidal thread on the outside and a standard metric thread on the hollow inside. The bush 30 has been introduced into the threaded cavity of the plastic material 10. Compression and friction between the complementary threads of the bush 30 and the cavity keep the bush in place. The bush does not move, even if a utility is screwed into the standard metric thread on the hollow inside of the bush and full momentum applied on the utility. The utility is not shown in figure 6.

**Claims**

1.  An assembly of a fastening device and a plastic material (10) of known elasticity, the fastening device comprising a threaded bush (30), arranged with a coarse thread (31) on the outside of the bush and a standard metric thread (32) on the hollow inside of the bush, wherein the coarse thread on the outside of the bush is arranged for screwing into a cavity of the plastic material (10), thereby said cavity of the plastic material is arranged with a complementary thread with a chosen distance within the groove, **characterized in that** the distance within the groove of the complementary thread is increased within the limit of the plastic materials elasticity, when the fastening device is fastened into the plastic material, wherein the coarse thread (31) on the outside of the bush and the complementary thread of the cavity of the plastic material are engaged by at least one of compression and friction.

2.  Assembly according to claim 1, **characterized in that** a trapezoidal thread is chosen as the coarse thread (31).

3.  Assembly according to claim 1 or 2, **characterized in that** the distance within the groove of the complementary thread is increased preferably by 0.1% to 10%, more preferred 0.3% to 6% and most preferred 0.5% to 3%.

4.  Assembly according to any of the claims 1 to 3, **characterized in that** high density polyethylene is chosen as the plastic material.

5.  Assembly according to any of the claims 1 to 4, **characterized in that** an increase of the friction engaging the coarse thread on the outside of the bush and the complementary thread of the cavity of the plastic material is obtained by structural modification of the coarse thread on the outside of the bush, thereby obtaining at least one modified contact area arranged to be engaged with the complementary thread.

6.  Assembly according to claim 5, **characterized in that** the modified contact area comprises a structure selected from the group consisting of random unevenness, random roughness, regular unevenness and regular roughness.

7.  Assembly according to claim 5, **characterized in that** the modified contact area comprises a changed chemical structure obtained by means selected from the group consisting of oxidation and etching.

8.  Assembly according to claim 5, **characterized in that** the modified contact area comprises a changed chemical structure obtained by means selected from the group consisting of coating, gluing and impregnation.

9.  Method for bolting a fastening device into a plastic material (10) of known elasticity, wherein the fastening device comprises a threaded bush (30), which is arranged with a coarse thread (31) on the outside of the bush and a standard metric thread (32) on the hollow inside of the bush, wherein the steps of

    - forming a cavity in the plastic material and
    - forming threads (20, 21, 22), complementary to the coarse threads on the outside of the bush, in the surface of said cavity

    are performed prior to screwing the coarse thread on the outside of the bush into the threaded cavity of a plastic material, **characterized in that** the distance within the groove of the complementary thread is being increased within the limits of elasticity of the plastic material by screwing the fastening device into the cavity of the plastic material, wherein the coarse thread on the outside of the bush and the complementary thread of the cavity of the plastic material are being engaged by at least one of compression and friction.

10. Method according to claim **9, characterized in that** the friction engaging the coarse thread on the outside of the bush and the complementary thread of the cavity of the plastic material is increased by structural modification of the tapered thread on the outside of the bush, wherein the structural modification is selected from the group consisting of providing random unevenness, regular unevenness, random physical roughness, regular physical roughness, fish hooks and applying oxidation, etching, coating, gluing, impregnation.

11. Article comprising an assembly of a fastening device and a plastic material (10) of known elasticity according to any of the claims 1 to 8, wherein the fastening device is to the limit screwed into the plastic material and a utility is screwed into the standard metric thread on the hollow inside of the fastening device, **characterized in that** the maximum momentum of the internal screw is less than the momentum tolerable by the fastening device within the plastic material.

**Patentansprüche**

1. Anordnung einer Befestigungsvorrichtung und eines Kunststoffmaterials (10) mit bekannter Elastizität, wobei die Befestigungsvorrichtung eine Gewindebuchse (30) umfasst, die mit einem Grobgewinde (31) an der Außenseite der Buchse und einem Standard-Metrischen Gewinde (32) auf der hohlen Innenseite der Buchse versehen ist, wobei das Grobgewinde an der Außenseite der Buchse dazu eingerichtet ist, in eine Kavität des Kunststoffmaterials (10) eingeschraubt zu werden, wobei die Kavität des Kunststoffmaterials mit einem komplementären Gewinde mit einem ausgewählten Abstand innerhalb der Gewindenut versehen ist, **dadurch gekennzeichnet, dass** der Abstand innerhalb der Gewindenut des komplementären Gewindes innerhalb der Grenzen der Elastizität des Kunststoffmaterials vergrößert wird, wenn die Befestigungsvorrichtung in das Kunststoffmaterial eingeschraubt wird, wobei das Grobgewinde (31) an der Außenseite der Buchse und das komplementäre Gewinde der Kavität des Kunststoffmaterials durch mindestens eines aus Kompression und Reibung verbunden werden.

2. Anordnung nach Anspruch 1, **dadurch gekennzeichnet, dass** ein Trapezgewinde als Grobgewinde (31) gewählt ist.

3. Anordnung nach Anspruch 1 oder 2, **dadurch gekennzeichnet, dass** der Abstand innerhalb der Gewindenut des komplementären Gewindes vorzugsweise um 0,1 % bis 10 %, bevorzugter um 0,3 % bis 6 % und am bevorzugtesten um 0,5 % bis 3 % vergrößert wird.

4. Anordnung nach einem der Ansprüche 1 bis 3, **dadurch gekennzeichnet, dass** hochdichtes Polyethylen als Kunststoffmaterial gewählt ist.

5. Anordnung nach einem der Ansprüche 1 bis 4, **dadurch gekennzeichnet, dass** eine Erhöhung der Reibung zwischen dem Grobgewinde an der Außenseite der Buchse und dem komplementären Gewinde der Kavität des Kunststoffmaterials durch strukturelle Modifikation des Grobgewindes an der Außenseite der Buchse erreicht wird, wodurch mindestens eine modifizierte Kontaktfläche geschaffen wird, die zur Verbindung mit dem komplementären Gewinde eingerichtet ist.

6. Anordnung nach Anspruch 5, **dadurch gekennzeichnet, dass** die modifizierte Kontaktfläche eine Struktur umfasst, die aus der Gruppe bestehend aus zufälliger Unebenheit, zufälliger Rauheit, regelmäßiger Unebenheit und regelmäßiger Rauheit ausgewählt ist.

7. Anordnung nach Anspruch 5, **dadurch gekennzeichnet, dass** die modifizierte Kontaktfläche eine veränderte chemische Struktur umfasst, die durch Mittel ausgewählt aus der Gruppe bestehend aus Oxidation und Ätzung erzeugt wird.

8. Anordnung nach Anspruch 5, **dadurch gekennzeichnet, dass** die modifizierte Kontaktfläche eine veränderte chemische Struktur umfasst, die durch Mittel ausgewählt aus der Gruppe bestehend aus Beschichtung, Verklebung und Imprägnierung erzeugt wird.

9. Verfahren zum Einschrauben einer Befestigungsvorrichtung in ein Kunststoffmaterial (10) mit bekannter Elastizität, wobei die Befestigungsvorrichtung eine Gewindebuchse (30) umfasst, die mit einem Grobgewinde (31) an der Außenseite der Buchse und einem Standard-Metrischen Gewinde (32) auf der hohlen Innenseite der Buchse versehen ist, wobei die Schritte:

- Ausbilden einer Kavität im Kunststoffmaterial und
- Ausbilden von Gewinden (20, 21, 22), die komplementär zu den Grobgewinden an der Außenseite der Buchse sind, an der Oberfläche der genannten Kavität

vor dem Einschrauben des Grobgewindes an der Außenseite der Buchse in die Gewindekavität eines Kunststoffmaterials durchgeführt werden, **dadurch gekennzeichnet, dass** der Abstand innerhalb der Gewindenut des komplementären Gewindes innerhalb der Elastizitätsgrenzen des Kunststoffmaterials durch das Einschrauben der Befestigungsvorrichtung in die Kavität des Kunststoffmaterials vergrößert wird, wobei das Grobgewinde an der Außenseite der Buchse und das komplementäre Gewinde der Kavität des Kunststoffmaterials durch mindestens eine der Kräfte von Kompression und Reibung verbunden werden.

10. Verfahren nach Anspruch 9, **dadurch gekennzeichnet, dass** die Reibung zwischen dem Grobgewinde an der Außenseite der Buchse und dem komplementären Gewinde der Kavität des Kunststoffmaterials durch strukturelle Modifikation des Grobgewindes an der Außenseite der Buchse erhöht wird, wobei die strukturelle Modifikation aus der Gruppe bestehend aus zufälliger Unebenheit, regelmäßiger Unebenheit, zufälliger physikalischer Rauheit, regelmäßiger physikalischer Rauheit, Hakenstrukturen sowie der Anwendung von Oxidation, Ätzung, Beschichtung, Verklebung, Imprägnierung ausgewählt wird.

11. Artikel, umfassend eine Anordnung einer Befestigungsvorrichtung und eines Kunststoffmaterials (10) mit bekannter Elastizität nach einem der Ansprüche 1 bis 8, wobei die Befestigungsvorrichtung bis zum Limit in das Kunststoffmaterial eingeschraubt ist und ein Gebrauchsteil in das Standard-Metrische Gewinde auf der hohlen Innenseite der Befestigungsvorrichtung eingeschraubt ist, **dadurch gekennzeichnet, dass** das maximale Drehmoment der inneren Schraube kleiner ist als das von der Befestigungsvorrichtung im Kunststoffmaterial tolerierbare Drehmoment.

**Revendications**

1. Un assemblage d'un dispositif de fixation et d'une matière plastique (10) d'élasticité connue, le dispositif de fixation comprenant une douille filetée (30) agencée avec un filetage grossier (31) sur l'extérieur de la douille et un filetage métrique standard (32) sur l'intérieur creux de la douille, le filetage grossier sur l'extérieur de la douille étant agencé pour être vissé dans une cavité de la matière plastique (10), ladite cavité de la matière plastique étant agencée avec un filetage complémentaire avec une distance choisie à l'intérieur de la rainure de filetage, **caractérisé en ce que** la distance à l'intérieur de la rainure de filetage complémentaire est augmentée dans la limite de l'élasticité de la matière plastique, lorsque le dispositif de fixation est fixé dans la matière plastique, le filetage grossier (31) sur l'extérieur de la douille et le filetage complémentaire de la cavité de la matière plastique étant en prise par au moins l'un parmi la compression et le frottement.

2. L'assemblage selon la revendication 1, **caractérisé en ce que** un filetage trapézoïdal est choisi comme filetage grossier (31).

3. L'assemblage selon la revendication 1 ou 2, **caractérisé en ce que** la distance à l'intérieur de la rainure de filetage complémentaire est augmentée de préférence de 0,1% à 10%, plus préférablement de 0,3% à 6% et le plus préférablement de 0,5% à 3%.

4. L'assemblage selon l'une quelconque des revendications 1 à 3, **caractérisé en ce que** le polyéthylène haute densité est choisi comme matériau plastique.

5. L'assemblage selon l'une quelconque des revendications 1 à 4, **caractérisé en ce qu'**une augmentation du frottement en prise avec le filetage grossier extérieur de la douille et le filetage complémentaire de la cavité de la matière plastique est obtenue par modification structurelle du filetage grossier extérieur de la douille, obtenant ainsi au moins une zone de contact modifiée agencée pour être en prise avec le filetage complémentaire.

6. L'assemblage selon la revendication 5, **caractérisé en ce que** la zone de contact modifiée comprend une structure choisie dans le groupe constitué par une irrégularité aléatoire, une rugosité aléatoire, une irrégularité régulière et une rugosité régulière.

7. L'assemblage selon la revendication 5, **caractérisé en ce que** la zone de contact modifiée comprend une structure chimique modifiée obtenue par des moyens choisis dans le groupe constitué par l'oxydation et la gravure.

8. L'assemblage selon la revendication 5, **caractérisé en ce que** la zone de contact modifiée comprend une structure chimique modifiée obtenue par des moyens choisis dans le groupe constitué par le revêtement, le collage et l'imprégnation.

9. Procédé de vissage d'un dispositif de fixation dans une matière plastique (10) d'élasticité connue, dans lequel

le dispositif de fixation comprend une douille filetée (30) qui est agencée avec un filetage grossier (31) sur l'extérieur de la douille et un filetage métrique standard (32) sur l'intérieur creux de la douille, dans lequel les étapes de

- formation d'une cavité dans la matière plastique et
- formation de filetages (20, 21, 22), complémentaires aux filetages grossiers sur l'extérieur de la douille, dans la surface de ladite cavité

sont réalisées avant de visser le filetage grossier sur l'extérieur de la douille dans la cavité filetée d'une matière plastique, **caractérisé en ce que** la distance à l'intérieur de la rainure du filetage complémentaire est augmentée dans les limites d'élasticité de la matière plastique par vissage du dispositif de fixation dans la cavité de la matière plastique, dans lequel le filetage grossier sur l'extérieur de la douille et le filetage complémentaire de la cavité de la matière plastique sont engagés par au moins l'un parmi la compression et le frottement

10. Procédé selon la revendication 9, **caractérisé en ce que** le frottement en prise avec le filetage grossier à l'extérieur de la douille et le filetage complémentaire de la cavité de la matière plastique est augmenté par une modification structurelle du filetage conique à l'extérieur de la douille, dans lequel la modification structurelle est choisie dans le groupe consistant à fournir une irrégularité aléatoire, une irrégularité régulière, une rugosité physique aléatoire, une rugosité physique régulière, des hameçons et à appliquer une oxydation, une gravure, un revêtement, un collage, une imprégnation.

11. Article comprenant un assemblage d'un dispositif de fixation et d'une matière plastique (10) d'élasticité connue selon l'une quelconque des revendications 1 à 8, dans lequel le dispositif de fixation est vissé à la limite dans la matière plastique et une utilité est vissée dans le filetage métrique standard sur l'intérieur creux du dispositif de fixation, **caractérisé en ce que** l'impulsion maximale de la vis interne est inférieure à l'impulsion tolérable par le dispositif de fixation dans la matière plastique.

Fig. 1

Fig. 2

Fig. 3

Fig. 4

33

$F_H$

$r$

$d$

$F_s$

Fig. 5

10

30

Fig. 6

**EP 4 027 027 B1**

**REFERENCES CITED IN THE DESCRIPTION**

**Patent documents cited in the description**

- GB 2241549 A
- DE 2057970
- EP 1055074 A
- JP 55166519 B
- KR 200358130
- US 5308205 A
- US 7152837 B
- WO 2020193272 A1
- US 20020102146 A1
- US 20150117976 A1